# EUROPÄISCHE PATENTANMELDUNG

(11) **EP 0 799 753 A2**
(43) Veröffentlichungstag der Anmeldung: **08.10.1997**
(21) Anmeldenummer: 97102623.2
(22) Anmeldetag: 19.02.1997
(51) Int. Cl.: B60R 25/10

(54) **Verfahren und Einrichtung zum Wiederauffinden von Fahrzeugen**

(30) Priorität: 27.02.1996 DE 19607375
(71) Anmelder: DeTex Deutsche Textfunk GmbH, 64283 Darmstadt (DE)
(72) Erfinder: Graf, Peter H., 60431 Frankfurt/Main (DE)
(74) Vertreter: Schieferdecker, Lutz, Dipl.-Ing.

(57) **Zusammenfassung**

Beim Verfahren und der Einrichtung zum Wiederauffinden von Fahrzeugen nach der Erfindung sind fahrzeugspezifische Merkmalsdaten in einer Datenbank (10) gespeichert, die auf einen Sendeanruf hin einen im Fahrzeug (24) befindlichen Sendeempfänger (20, 26, 30) aktiviert. Die Merkmalsdaten werden zusammen mit einem Pagingruf zum Sendeempfänger des betroffenen Fahrzeugs übersendet. Der Sender (30) des Sendeempfängers sendet dann die Merkmalsdaten wieder aus, so daß sich mittels eines außerhalb des Fahrzeugs befindlichen, für den Empfang von Merkmalsdaten vorbereiteten und mit einer Anzeigeeinrichtung (34) für die Merkmalsdaten versehenen Empfängers (32) die dort empfangenen und angezeigten Merkmalsdaten mit den Merkmalen von Fahrzeugen auf Übereinstimmung hin überprüfen lassen.

## Beschreibung

Die Erfindung betrifft ein Verfahren zum Wiederauffinden von gestohlenen Fahrzeugen, bei dem eine nach einer Fahrzeugdiebstahlsmeldung im Wege über eine Datenbank aktivierte zentrale Funk-Sendestation über ihr Sendegebiet einen mit der speziellen Adresse des als gestohlen gemeldeten Fahrzeugs codierten Aktivierungsruf (Pagingruf) ausstrahlt, der vom Empfänger eines im Fahrzeug befindlichen Sendeempfängers aufgenommen wird und den Sender dieses Sendeempfängers aktiviert, der dann ein Signal zum Empfang in außerhalb des Fahrzeugs befindlichen Empfängern aussendet.

Die Erfindung betrifft außerdem Einrichtungen zur Durchführung dieses Verfahrens.

Bekannt sind Einrichtungen vor allem an höherwertigen Fahrzeugen mit einem Sender, der bei Feststellung einer Unregelmäßigkeit an einem geparkten Fahrzeug einen Senderuf ausstrahlt, der von einem am Fahrzeugschlüssel bzw. an einem Anhänger zu demselben befindlichen Miniaturempfänger erfaßt und durch Abgabe eines Signaltones dem Besitzer des Fahrzeugschlüssels zur Kenntnis gebracht wird. Damit soll der Fahrzeugbesitzer möglichst frühzeitig darüber informiert werden, daß an seinem in der Nähe abgestellten Fahrzeug eine Unregelmäßigkeit vorliegt. Diese kann nicht nur in einer Beschädigung des Fahrzeugs, sondern auch darin bestehen, daß das Fahrzeug gerade entwendet wird. Nach dem Diebstahl ist das Fahrzeug allerdings nicht mehr lokalisierbar.

Bekannt ist ferner, daß sich fahrzeugspezifische Daten in einer zentralen Datenbank speichern lassen, die vom Besitzer eines gestohlenen Fahrzeugs zur Aussendung eines Suchrufs für sein Fahrzeug veranlaßt werden kann. Die Polizei kann zwar diesen Suchruf aufnehmen, jedoch ist das Fahrzeug damit noch nicht lokalisiert.

Bei einem aus DE 43 09 341 A1 bekannten System handelt es sich um ein Kfz-Identifizierungssystem, bei dem die Kennungen vermißter Fahrzeuge zunächst einer Zentrale und von dieser zusammengefaßt und systematisiert einem Funk-Großsender zugeleitet werden, welcher die Summe der Kennungen über Funk an Straßenverkehrs-Überwachungsstellen (z.B. Grenzstationen, Mautstellen) aussendet. An den Überwachungsstellen können in Identifikationsgeräten dann die empfangenen Kennungen mit den in jedem Fahrzeug vorher fest eingelesenen und nicht veränderbaren Kennungen (z.B. eine in eine Fensterscheibe eingeätzte Zeichenkombination) verglichen werden. Werden übereinstimmende Kennungen als Ergebnis angezeigt, so handelt es sich um ein entwendetes Fahrzeug. Die Wahrscheinlichkeit des Auffindens eines gestohlenen Fahrzeugs ist hierbei jedoch ziemlich gering und der Suchaufwand sehr hoch, da alle bei den Überwachungsstellen vorbeifahrenden Fahrzeuge auf ihre Kennungsidentität überprüft werden müssen.

Bei einem aus DE 43 18 596 A1 bekannten System wird, nachdem eine Kfz-Diebstahlsmeldung erfolgt ist, über ein Funksendernetz die individuelle Nennung dieses Fahrzeugs ausgesendet. In den mit einer verborgen gehaltenen Empfangseinrichtung ausgestatteten Fahrzeugen wird die empfangene individuelle Nennung mit der eigenen individuellen Nennung verglichen. Bei Übereinstimmung wird eine Funktionsabschaltung des Fahrzeugs, das dann das gestohlene Fahrzeug ist, z.B. durch Abschalten der Motorsteuerelektronik herbeigeführt. Eine Lokalisierung eines gestohlenen Fahrzeugs läßt sich hiermit nicht durchführen.

Durch das aus DE 44 05 385 A1 bekannte System wird eine unbefugte Inbetriebnahme von Fahrzeugen durch Einsatz einer elektronischen Verriegelungseinrichtung verhindert, wobei davon ausgegangen wird, daß nach einer Fahrzeug-Diebstahlsmeldung über einen Rundfunkdienst übertragene Kennungsdaten des gestohlenen Fahrzeugs ausgesendet werden. Die in den Fahrzeugen empfangenen Kennungsdaten werden mit den eigenen unveränderbaren Kennungsdaten verglichen. Bei Übereinstimmung erfolgt eine elektronische Verriegelung, so daß das Fahrzeug, das dann ein als gestohlen gemeldetes Fahrzeug ist, nicht mehr wegfahren kann. Auch hier ist eine Lokalisierung des gestohlenen Fahrzeugs nicht möglich.

Aus der US-Patentschrift 4 177 466 ist ein Autodiebstahl-Detektionssystem bekannt, das eine zentrale Sendestation zur Rundum-Funkausstrahlung eines Rufsignals enthält, das mit einer Adreßcodierung moduliert ist. Die jeweils ausgewählte Adreßcodierung ist für ein entwendetes Auto kennzeichnend, wobei jedem diesem Detektionssystem angeschlossenen Auto ein eigener, kennzeichnender Adreßcode zugeordnet ist. In den Autos sind verborgen eingebaute Transponder (Sender/Empfänger) vorgesehen, wobei die Empfangsseite mit einem Decodierer ausgestattet ist, der ausschließlich auf den diesem Auto zugeordneten Adreßcode anspricht. Das von der zentralen Sendestation mit einem speziellen Adreßcode rundum ausgesendete Rufsignal wird also nur vom Transponder in demjenigen Auto ausgewertet, dem dieser Adreßcode zugeordnet ist. In diesem angesprochenen Auto wird dann über ein Relais der Sender des Transponders betätigt. Der Transpondersender strahlt über eine Antenne ein Ortungssignal (Locator Signal) ab, das dazu ausgenutzt werden kann, mittels geeigneter Funkortungseinrichtungen (z.B. Direction Finder, Peiler, Annäherungsdetektoren, Hyperbel-Standlinienbestimmung) den momentanen Aufenthaltsort des jeweils entwendeten und das Ortungssignal abstrahlenden Autos festzustellen. Nachteilig ist hierbei, daß bei dichter Verkehrslage ein korrektes und schnelles Auffinden des zutreffenden Fahrzeugs aus einer großen Fahrzeugmenge ohne zusätzliche genauere Merkmalsinformationen über das Fahrzeug sehr schwierig ist.

Aus DE 44 03 990 A1 ist ein Autoradio- und Autodiebstahl-Detektionsverfahren bekannt, bei dem über Funk-Übertragungskanäle ein codierter Datenstrom übertragen wird, der bei Empfang in einer im Autoradio bzw. Auto eingebauten und in keiner Weise abschaltbaren Empfangseinrichtung auf Übereinstimmung mit einem eigenen unveränderbaren Code überprüft wird. Bei Übereinstimmung wird eine Diebstahlssicherung ausgelöst, so daß eine ordnungsgemäße Nutzung des Autoradios bzw. des Autos nicht mehr möglich ist. Darüber hinaus kann gemäß einer Weiterbildung bei Empfang eines den eigenen Code enthaltenden Datenstroms ein Sender aktiviert werden, der vorzugsweise mit geringer Sendeleistung und damit auch geringer Funkreichweite (z.B. 20 m) Signale aussendet, die im Rahmen von beispielsweise polizeilichen Verkehrsüberwachungsmaßnahmen empfangen werden können und eine Feststellung dahingehend zulassen, ob ein gestohlenes Autoradio oder Fahrzeug vorliegt oder nicht. Ein gezieltes Auffinden des entwendeten Fahrzeugs ist hierbei also erst dann möglich, wenn sich das Fahrzeug in der Nähe einer Verkehrsüberwachungsstation befindet, was insbesondere bei Vorliegen eines dichten Verkehrsstroms das schnelle und exakte Auffinden des zutreffenden Fahrzeugs sehr erschwert, da äußerliche Merkmalsangaben zum gesuchten Fahrzeug nicht vorhanden sind.

Der Erfindung liegt daher die Aufgabe zugrunde, ein Verfahren und eine Einrichtung zum Wiederauffinden von gestohlenen Fahrzeugen zu schaffen, durch welche die Wahrscheinlichkeit des raschen und korrekten Auffindens eines gestohlenen Fahrzeugs wesentlich erhöht wird.

Gemäß der Erfindung, die sich auf ein Verfahren der eingangs genannten Art bezieht, wird diese Aufgabe dadurch gelöst, daß zusätzlich zum Aktivierungsruf (Pagingruf) noch in der Datenbank gespeicherte fahrzeugspezifische Merkmalsdaten von der zentralen Funk-Sendestation ausgesendet werden und daß diese Merkmalsdaten vom aktivierten Sender des im angerufenen Fahrzeug befindlichen Sendeempfängers als Modulationssignal eines Trägers wiederausgesendet werden, so daß sich mittels eines außerhalb des Fahrzeugs befindlichen, für den Empfang von Merkmalsdaten vorbereiteten und mit einer Anzeigeeinrichtung für die Merkmalsdaten versehenen Empfängers die dort empfangenen und angezeigten Merkmalsdaten mit den Merkmalen von Fahrzeugen auf Übereinstimmung hin überprüfen lassen.

Zu den Merkmalsdaten gehören Eigenschaften des Fahrzeugs, die dieses bereits bei äußerer Betrachtung leicht identifizierbar machen, also z.B. Fahrzeugtyp (Mercedes S 600, Porsche Carrera etc.), Farbe und amtliches Kennzeichen. Wenn ausgewählte Polizeistationen beispielsweise an Autobahnen sowie an Grenzübergängen mit einem Empfänger der genannten Art ausgerüstet sind, läßt sich anhand der Übereinstimmung der Merkmale eines in der Nähe befindlichen Fahrzeugs mit den in der Anzeigeeinrichtung des dortigen Empfängers angezeigten Merkmalsdaten ohne weitere Überprüfung feststellen, ob an dem Fahrzeug eine Unregelmäßigkeit besteht, beispielsweise, ob es gestohlen ist oder nicht. Dabei wird es nicht nur möglich, das abhandengekommene Fahrzeug seinem Besitzer wieder zuzuführen, sondern auch den aktuellen Fahrzeugführer auf mögliche Straftaten zu überprüfen, der im Falle eines gestohlenen Fahrzeugs entweder selbst der Dieb oder aber mit hoher Wahrscheinlichkeit mit den Dieben in Verbindung steht. Die in einem Empfänger z.B. einer Polizeistation oder einer Grenzübergangsstation empfangenen Merkmalsdaten eines entwendeten Fahrzeugs können aber auch notiert, ausgedruckt oder in einer anderen Weise aufgezeichnet werden, so daß dann das gesuchte Fahrzeug bei einer Kontrollfahrt oder in sonstiger Weise unter Zuhilfenahme dieser Aufzeichnungen gefunden werden kann.

In einem Fahrzeug, einer Kontrollstation und in der Datenbank angeordnete und der Lösung der angegebenen Aufgabe dienende Einrichtungen zur Durchführung des Verfahrens nach der Erfindung sind in den Ansprüchen 11 bis 18 angegeben.

In zweckmäßiger Weise läßt sich für den Sendeanruf von der zentralen Funk-Sendestation zu den Fahrzeugen hin eine Frequenz aus einem UKW-Funkkanal wählen. Der Sendeempfänger wird in bevorzugter Weise an einer im Fahrzeug versteckten Stelle eingebaut und mit einer am Fahrzeug vorhandenen Empfangsantenne gekoppelt. In Weiterbildung der Erfindung braucht der Sendeempfänger nur auf eine Sendeleistung ausgelegt zu werden, die eine Reichweite der Abstrahlung von einigen hundert Metern in der Stadt und einigen Kilometern im freien Gelände erlaubt. Es besteht auch die Möglichkeit, den Sendeempfänger auf einen von der Datenbank empfangenen Funkruf zum Eingriff in die elektronische Steuerung des Fahrzeugs mittels eines Aktivierungssignals zu veranlassen, so daß beispielsweise die Benzinzufuhr stark gedrosselt oder das Wiederanlassen des Motors gesperrt wird.

Die Erfindung wird nachstehend anhand der beigefügten Zeichnungen im einzelnen erläutert. Es zeigen:

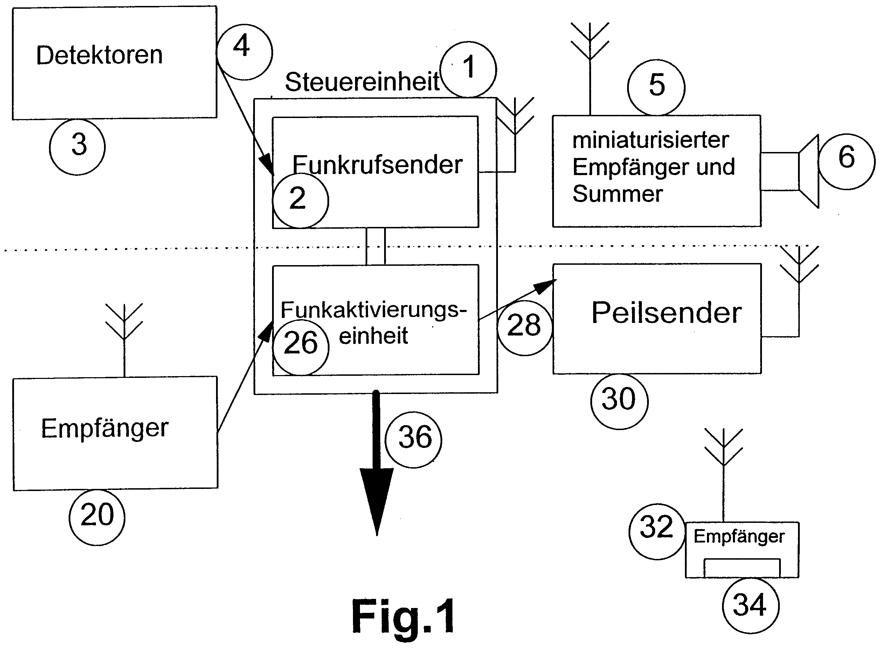

- Fig. 1: ein Blockdiagramm, das die grundsätzliche Betriebsweise der Erfindung erläutert, und
- Fig. 2: eine schematische Darstellung zur weiteren Erläuterung der Erfindung.

In einem Fahrzeug befindet sich eine elektronische Steuereinheit 1, welche einen Funkrufsender 2 umfaßt. Der Funkrufsender wird von Detektoren 3 aktiviert, die eine unregelmäßige Situation am Fahrzeug feststellen und ein Aktivierungssignal über Leitungen 4 an den Funkrufsender 2 leiten. Unregelmäßige Situationen können beispielsweise die Beschädigung des Fahrzeugs oder das Aufbrechen einer der Fahrzeugtüren sein. Nach Empfang des Aktivierungssignals sendet der Funkrufsender einen persönlichen Funkruf über eine am Fahrzeug befindliche Antenne aus.

Zu dem Fahrzeugschlüssel gehört ein Anhänger, der einen miniaturisierten Empfänger 5 mit einem Summer 6 enthält, der bei Empfang des persönlichen Funkrufs aus dem Funkrufsender 2 den Summer 6 zur Abgabe eines Summtones veranlaßt. Durch den Summton wird der Besitzer des Fahrzeugschlüssels mit Anhänger darauf aufmerksam gemacht, daß an seinem Fahrzeug eine Unregelmäßigkeit passiert ist. Im Falle eines Fahrzeugdiebstahls wird diesen der Besitzer sogleich wahrnehmen. Nach dieser ersten Phase, der Alarmphase, findet als zweite Phase die Suchaktion für das Fahrzeug statt.

In einer zentralen Datenbank 10 sind alle fahrzeugrelevanten Daten gespeichert. Zu diesen Daten gehören nicht nur die Eintragungen aus dem Fahrzeugbrief, sondern auch solche Merkmale des Fahrzeugs, die bei Betrachtung desselben sofort wahrgenommen werden können. Zu diesen Merkmalen gehören beispielsweise das Fabrikat (Mercedes, Porsche, BMW), die Farbe, Schiebedach, das amtliche Kennzeichen und dergleichen. Diese die Merkmale umfassenden Merkmalsdaten können vom Besitzer des Fahrzeugs mittels eines an die Datenbank 10 per Telefon 14 oder Telefax übermittelten Paßwortes angesteuert werden, wobei das Paßwort den Anrufer als den rechtmäßigen Besitzer des betreffenden Fahrzeugs ausweist. Zu dem Anruf an die Datenbank gehört auch die Anweisung, einen Aktivierungsruf (Pagingruf) auszusenden, der die Adresse eines Empfängers 20 im Fahrzeug 24 enthält.

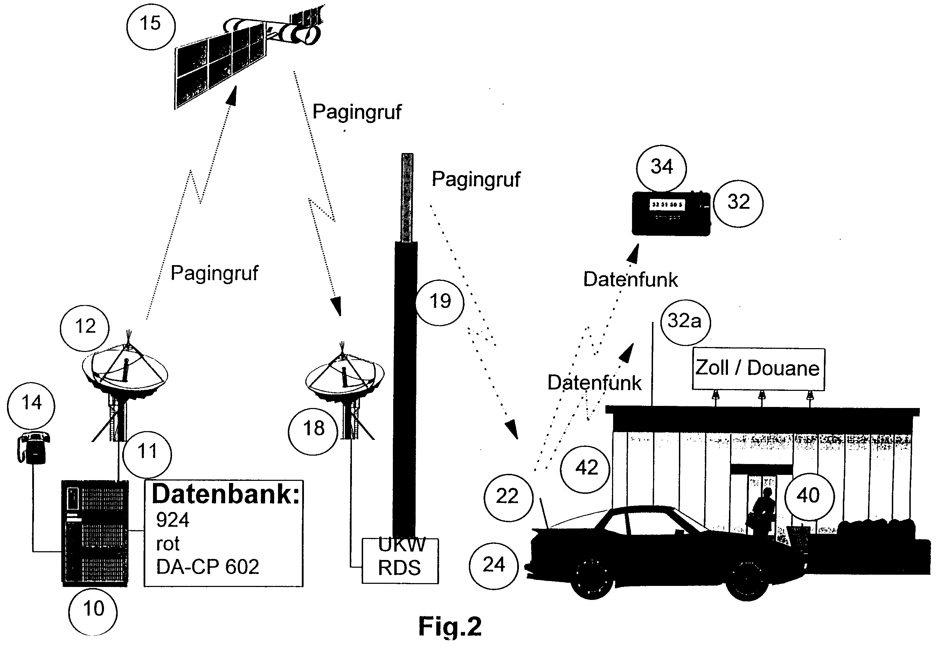

Die Datenbank 10 leitet auf den legitimierten Anruf hin einen Paginganruf über Kabel 11 einer ortsfesten Sendestation 12 zu, die den Pagingruf über Satellitenfunk 15 an alle über das Gebiet Deutschlands verteilte Empfangsanlagen ausstrahlt. Dies geschieht über einen vorhandenen Funkkanal, wie z.B. Omniport-RDS, Cityruf, Ermes oder GSM. Eine der Empfangsanlagen ist in Fig. 2 mit 18 bezeichnet. Jede Empfangsanlage 18 besitzt einen UKW-Sender 19, der den Pagingruf über sein Sendegebiet ausstrahlt. Der Pagingruf wird über eine Antenne 22 vom Empfänger 20 des Fahrzeugs 24 aufgenommen und einer Funkaktivierungseinheit 26 innerhalb der Steuereinheit 1 des Fahrzeugs 24 zugeleitet.

Im Fahrzeug 24 befindet sich an versteckter Stelle eingebaut ein Peilsender 30, der mit der Funkaktivierungseinheit 26 über eine Leitung 28 verbunden ist. Ausgelöst durch ein Aktivierungssignal aus der Funkaktivierungseinheit 26 sendet der Peilsender 30 über die Fahrzeugantenne 22 ein Trägersignal aus, das mit den Merkmalsdaten moduliert ist, die das Fahrzeug charakterisierende Merkmale, also beispielsweise Fahrzeugtyp, amtliches Kennzeichen, Fahrzeugfarbe und dergleichen enthalten. Die Merkmalsdaten sind im Pagingruf untergebracht, so daß das vom Peilsender 30 erzeugte Trägersignal mit den aus dem Pagingruf enthaltenen Merkmalsdaten im Peilsender 30 moduliert wird. Die Reichweite des Peilsenders 30 beträgt innerhalb der Stadt gewöhnlich mehrere hundert Meter und im freien Gelände einige Kilometer.

Polizeiliche Überwachungsorgane 40 beispielsweise an den Zollabfertigungskontrollen 42 sind im Besitze eines tragbaren Empfängers 32 oder eines stationären Empfängers 32a, der auf die Frequenz des Peilsenders 30 abgestimmt ist. Wenn der Peilsender 30 das modulierte Signal aussendet, wird es vom Empfänger 32 empfangen und demoduliert. Auf einer mit dem Empfänger 32, 32a gekoppelten Anzeige 34 werden die empfangenen Merkmalsdaten angezeigt. Da die Übereinstimmung oder Nichtübereinstimmung der angezeigten Merkmalsdaten mit dem kontrollierten Fahrzeug sofort und ohne weiteres festgestellt werden kann, ist im Falle des Fahrzeugdiebstahls nicht nur das Fahrzeug 24 wiederaufgefunden, sondern auch der Fahrer des Fahrzeugs 24 als Dieb oder dessen Komplize entlarvt.

Ergänzend kann die Funkaktivierungseinheit 26 mit der elektronischen Motorsteuerung (Motronic) des Fahrzeugs 24 über eine Leitung 36 gekoppelt sein und dort veranlassen, daß die Kraftstoffzufuhr gedrosselt oder das Wiederanlassen des Motors gesperrt wird. Durch diese Maßnahmen wird das Fahrzeug 24 selbst im Verkehr nicht gefährdet, wohl aber seine Mobilität auffallend herabgesetzt.

Der Peilsender 30 kann so eingerichtet sein, daß er seine Sendung nicht kontinuierlich, sondern in kurzen zeitlichen Abständen von etwa 15 Sekunden fünf Sekunden lang ausstrahlt, um den Empfang mehrerer mobiler Peilsender aus anderen Fahrzeugen zu ermöglichen. Ferner liegt es im Rahmen der Erfindung, den Empfänger 32 mit einem Drucker auszurüsten, der die empfangenen Merkmalsdaten ausdruckt.

Die Erfindung hat die Eigenschaft, daß die Polizei nur dann von einer Suchmeldung Kenntnis erlangt, wenn sich das gesuchte Objekt selbst als gestohlen kenntlich macht. Ferner wird das gesuchte Fahrzeug nicht nur lokalisiert, sondern es werden auch mögliche Straftäter erfaßt. Dazu ist nach der Erfindung nur eine relativ einfache Nachrüstung des Fahrzeugs mit einer Steuereinheit und einem einen Empfänger und einen Peilsender enthaltenden Sendeempfänger erforderlich, was relativ rasch und preisgünstig geschehen kann und außerdem von außen unsichtbar bleibt.

## Patentansprüche

1. Verfahren zum Wiederauffinden von gestohlenen Fahrzeugen, bei dem eine nach einer Fahrzeugdiebstahlsmeldung im Wege über eine Datenbank aktivierte zentrale Funk-Sendestation über ihr Sendegebiet einen mit der speziellen Adresse des als gestohlen gemeldeten Fahrzeugs codierten Aktivierungsruf (Pagingruf) ausstrahlt, der vom Empfänger eines im Fahrzeug befindlichen Sendeempfängers aufgenommen wird und den Sender dieses Sendeempfängers aktiviert, der dann ein Signal zum Empfang in außerhalb des Fahrzeugs befindlichen Empfängern aussendet, **dadurch gekennzeichnet,** daß zusätzlich zum Aktivierungsruf (Pagingruf) noch in der Datenbank (10) gespeicherte fahrzeugspezifische Merkmalsdaten von der zentralen Funk-Sendestation (12) ausgesendet werden und daß diese Merkmalsdaten vom aktivierten Sender (30) des im angerufenen Fahrzeug (24) befindlichen Sendeempfängers (20, 26, 30) als Modulationssignal eines Trägers wiederausgesendet werden, so daß sich mittels eines außerhalb des Fahrzeugs befindlichen, für den Empfang von Merkmalsdaten vorbereiteten und mit einer Anzeigeeinrichtung (34) für die Merkmalsdaten versehenen Empfängers (32) die dort empfangenen und angezeigten Merkmalsdaten mit den Merkmalen von Fahrzeugen auf Übereinstimmung hin überprüfen lassen.

2. Verfahren nach Anspruch 1, **dadurch gekennzeichnet,** daß der Sender (30) des im Fahrzeug (24) untergebrachten Sendeempfängers (20, 26, 30) die Merkmalsdaten in zeitlichen Intervallen aussendet.

3. Verfahren nach Anspruch 1 oder 2, **dadurch gekennzeichnet,** daß der Sender (30) des im Fahrzeug (24) untergebrachten Sendeempfängers (20, 26, 30) mit einer höchstens so bemessenen Sendeleistung abstrahlt, daß sich eine Funkreichweite von einigen hundert Metern in der Stadt und von einigen Kilometern im freien Gelände ergibt.

4. Verfahren nach einem der vorhergehenden Ansprüche, **dadurch gekennzeichnet,** daß der Sender (30) des im Fahrzeug (24) untergebrachten Sendeempfängers (20, 26, 30) aufgrund des Aktivierungsrufes (Pagingruf) über eine Funkaktivierungseinheit (26) ausgelöst wird.

5. Verfahren nach Anspruch 4, **dadurch gekennzeichnet,** daß die Aktivierungseinheit (26) ergänzend die elektronische Motorsteuerung (Motronic) des Fahrzeugs (24) beeinflußt und Fahrzeugfunktionseinschränkungen veranlaßt, z.B. eine Drosselung der Kraftstoffzufuhr oder eine Wiederanlaßsperrung des Motors.

6. Verfahren nach einem der vorhergehenden Ansprüche, **dadurch gekennzeichnet,** daß in einem größeren zu überwachenden Gebiet wie Deutschland eine von einer zentralen Funk-Sendestation (12) ausgehende Funkübertragung des Aktivierungsrufs (Pagingruf) und der Merkmalsdaten über Satellitenfunk (15) zu zellularen Funk-Paging-Sendestationen (19) und von dort zu den Fahrzeugen erfolgt.

7. Verfahren nach einem der vorhergehenden Ansprüche, **dadurch gekennzeichnet** die Verwendung bereits vorhandener Funkkanäle wie z.B. Omniport-RDS, Cityruf, Ermes oder GSM zur Funkübertragung des Aktivierungsrufs (Pagingruf) und der Merkmalsdaten zu den Fahrzeugen.

8. Verfahren nach einem der vorhergehenden Ansprüche, **dadurch gekennzeichnet,** daß eine unregelmäßige Situation an einem Fahrzeug (24) mittels am Fahrzeug angebrachter Detektoren (3) festgestellt wird, von denen dann ein Aktivierungssignal an einen ebenfalls am Fahrzeug angebrachten Funkrufsender (2) geleitet wird, daß bei Vorliegen eines Aktivierungssignals der Funkrufsender einen persönlichen Funkruf im Wege über eine am Fahrzeug befindliche Antenne aussendet, daß der persönliche Funkruf mit einem miniaturisierten Empfänger (5) empfangen wird, der in einem speziell ausgebildeten, vom Fahrzeugbesitzer mitgeführten Schlüsselanhänger enthalten sein kann und mit einem Summer (6) beim Empfang des persönlichen Funkrufs einen Summton zur Signalisierung abgibt (Alarmphase).

9. Verfahren nach einem der vorhergehenden Ansprüche, **dadurch gekennzeichnet,** daß zu Beginn einer FahrzeugAuffindaktion die Datenbank (10) per Telefon (14) oder Telefax vom Besitzer des entwendeten Fahrzeugs angerufen und dort überprüft wird, ob der Anruf legitimiert ist oder nicht.

10. Verfahren nach Anspruch 9, **dadurch gekennzeichnet,** daß auf seiten der Datenbank (10) zur Legitimierung des Anrufers als rechtmäßigem Fahrzeugbesitzer eine Paßwortüberprüfung vorgenommen wird.

11. Verfahren nach Anspruch 1, **dadurch gekennzeichnet,** daß es sich bei den Fahrzeugen (24), deren Merkmalsdaten mit den empfangenen Merkmalsdaten auf Übereinstimmung überprüft werden, um solche Fahrzeuge handelt, die sich tatsächlich in der Nähe des für den Empfang von Merkmalsdaten vorbereiteten Empfängers (32) beispielsweise in einer Polizeistation oder in einer Grenzübergangsstation befinden.

12. Verfahren nach Anspruch 1, **dadurch gekennzeichnet,** daß die in einem Empfänger (32) z.B. einer Polizeistation oder einer Grenzübergangsstation empfangenen Merkmalsdaten eines entwendeten Fahrzeugs auch notiert, ausgedruckt oder in einer anderen Weise aufgezeichnet werden, so daß dann das gesuchte Fahrzeug (32) bei einer Kontrollfahrt oder in sonstiger Weise unter Zuhilfenahme dieser Aufzeichnungen gefunden werden kann.

13. In einem Fahrzeug angeordnete Einrichtung zur Durchführung des Verfahrens nach einem der vorhergehenden Ansprüche, **dadurch gekennzeichnet,** daß eine auf Funkruf aus einer zentralen Sendestation (10, 12) ansprechende Steuereinheit (1) mit einer Funkaktivierungseinheit (26) vorgesehen ist, an die ein den Sender des Sendeempfängers (20, 26, 30) bildender Peilsender (30) zur Abstrahlung von Merkmalsdaten über eine kurze Reichweite angeschlossen ist.

14. Einrichtung nach Anspruch 13, **dadurch gekennzeichnet,** daß die Funkaktivierungseinheit (26) in der Steuereinheit (1) ergänzend mit der elektronischen Motorsteuerung (Motronic) des Fahrzeugs (24) gekoppelt ist.

15. Einrichtung nach Anspruch 13 oder 14, **dadurch gekennzeichnet,** daß der Peilsender (30) so eingerichtet ist, daß er seine Sendungen nicht kontinuierlich, sondern in kurzen Abständen von beispielsweise etwa 15 Sekunden fünf Sekunden lang ausstrahlt.

16. Einrichtung nach einem der Ansprüche 13 bis 15, **dadurch gekennzeichnet,** daß der Sendeempfänger (20, 26, 30) an einer im Fahrzeug (24) versteckten Stelle eingebaut und mit einer am Fahrzeug vorhandenen Antenne (22) verbunden ist.

17. In einer Kontrollstelle angeordnete Einrichtung zur Durchführung des Verfahrens nach einem der Ansprüche 1 bis 12, **dadurch gekennzeichnet,** daß in der Einrichtung der Kontrollstelle ein Empfänger (32, 32a) vorgesehen ist, der auf die vom Sender (30) des Sendeempfängers (20, 26, 30) eines Fahrzeugs kommende Funkabstrahlung der Merkmalsdaten abgestimmt ist.

18. Einrichtung nach Anspruch 17, **dadurch gekennzeichnet,** daß der Empfänger (32, 32a) eine Anzeigeeinrichtung (34) für die empfangenen Merkmalsdaten aufweist.

19. Einrichtung nach Anspruch 17 oder 18, **dadurch gekennzeichnet,** daß der Empfänger (32, 32a) mit einem Drucker (34) zum Ausdrucken der empfangenen Merkmalsdaten ausgerüstet ist.

20. In einer zentralen Datenbank angeordnete Einrichtung zur Durchführung des Verfahrens nach einem der Ansprüche 1 bis 12, **dadurch gekennzeichnet**, daß in der Einrichtung der zentralen Datenbank (10) als Merkmalsdaten alle fahrzeugrelevanten Daten gespeichert sind, wozu außer den Eintragungen aus dem Kraftfahrzeugbrief auch solche Merkmale des Fahrzeugs (24) gehören, die bei Betrachtung desselben sofort wahrgenommen werden können, beispielsweise das Fabrikat, die Farbe, Schiebedach und das amtliche Kennzeichen.
